# FASCICULE DE BREVET EUROPEEN

(11) **EP 4 025 780 B1**
(45) Date de publication et mention de la délivrance du brevet: **28.06.2023**
(21) Numéro de dépôt: 20776219.6
(22) Date de dépôt: 02.09.2020
(51) Int. Cl.: F02K 1/04, F02K 1/80

(54) **CONE D'EJECTION A FIXATION FLEXIBLE AERODYNAMIQUE**
AUSSTOSSKONUS MIT FLEXIBLER AERODYNAMISCHER BEFESTIGUNG
EJECTION CONE HAVING A FLEXIBLE AERODYNAMIC ATTACHMENT

(30) Priorité: 05.09.2019 FR 1909801
(43) Date de publication de la demande: 13.07.2022
(73) Titulaire: Safran Ceramics, 33185 Le Haillan (FR)
(72) Inventeur: CONETE, Eric, 77550 MOISSY-CRAMAYEL (FR); CARRERE, Benoit, 77550 MOISSY-CRAMAYEL (FR)
(74) Mandataire: Ernest Gutmann - Yves Plasseraud S.A.S.
(86) Numéro de dépôt international: PCT/FR2020/051524
(87) Numéro de publication internationale: WO 2021/044099

(56) Documents cités:
- EP-A1- 0 316 233
- FR-A1- 2 914 955
- FR-A1- 2 978 989
- US-A1- 2018 066 605

## Description

### Domaine technique de l'invention

La présente invention se rapporte à un ensemble situé à l'arrière (extrémité aval) d'une turbomachine d'aéronef pour optimiser l'écoulement des gaz chauds expulsés par la turbomachine, et possiblement absorber au moins une partie du bruit engendré par l'interaction de ces gaz chauds, issus des parties internes moteur (chambre de combustion, turbine(s), avec l'air ambiant et avec le flux d'air froid expulsé par la soufflante de la turbomachine.)

### Art antérieur - Présentation de l'invention

Plus précisément, l'invention concerne la liaison entre ce qui est souvent dénommé « cône d'éjection » et, située juste à l'amont, une sortie de gaz de la turbomachine.

Typiquement le cône d'éjection est complété (entouré) par une partie dite « tuyère primaire », ces éléments étant couramment désignés par les termes anglo- saxons « plug » ou « tail cône » pour le cône d'éjection et « nozzle » ou « primary nozzle » pour la tuyère.

Le « cône d'éjection » est destiné à être positionné en aval de la (partie) turbine de la turbomachine, autour de laquelle la tuyère primaire est placée concentriquement. Le cône d'éjection et la tuyère primaire sont tous deux fixés sur un carter de turbomachine par un système de fixation comprenant des brides.

Est ainsi déjà connu en soi, un ensemble pour turbomachine d'aéronef, comprenant :
- un élément central d'éjection de gaz, annulaire autour d'un axe (X) et adapté pour que du gaz soit éjecté par la turbomachine autour de lui, d'amont vers l'aval, et
- une bride de liaison interposée entre, à l'amont, une dite sortie de gaz d'une turbomachine et, à l'aval, l'élément central, pour les relier ensemble.

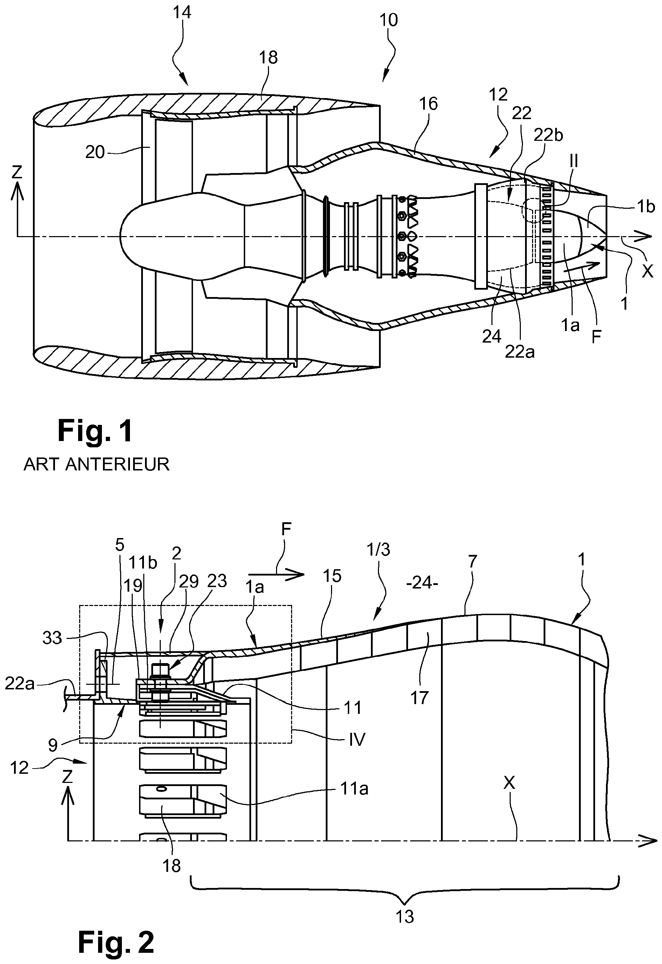

L'axe X précité est l'axe longitudinal, ou axe de rotation, de la turbomachine (en particulier de la soufflante 20 et des aubes mobiles du moteur 12 de la turbomachine schématisée figure 1).

L'élément central d'éjection de gaz peut correspondre au cône d'éjection précité (repéré 1 ci-après), ou au moins à la partie amont 1a ci-après.

Un cône d'éjection classique 1 est représenté à la figure 1, sur laquelle l'amont (AM) et l'aval (AV) de la structure suivant un axe moteur (axe X ci-avant) sont situés respectivement à gauche et à droite de la figure.

Plus généralement, est illustrée figure 1, une turbomachine à gaz d'aéronef 10, appelée aussi ci-après turboréacteur, dont la partie centrale, formant le moteur 12 à turbine(s) à gaz, est montée à l'intérieur d'un ensemble 14 de nacelle de moteur, comme cela est typique d'un aéronef conçu pour un fonctionnement subsonique. L'ensemble 14 de nacelle comprend généralement une nacelle de moteur (« core » en anglais) 16 et une nacelle de soufflante 18 entourant une soufflante 20 située axialement en amont du moteur 12.

Axialement a pour sens, suivant l'axe X ou parallèlement à lui. Est « circonférentiel » ce qui s'étend autour de l'axe X. Est « radial » ce qui radial à l'axe X, donc suivant l'axe Z ou parallèlement à lui. Est « radialement intérieur » ce qui est radialement plus proche de l'axe X que ne l'est ce qui est « radialement extérieur ».

Axialement en partie aval, le moteur 12 comprend au moins une turbine (qui peut être une turbine basse pression) et, encore plus en aval, un carter d'échappement 22 comprenant une virole annulaire interne 22a et une virole annulaire externe 22b délimitant entre elles une partie aval de la veine primaire 24 dans laquelle circule les gaz de combustion issus de la chambre de combustion du moteur 12.

Axialement, la virole annulaire interne 22a est reliée au cône d'éjection 1, lequel peut comprendre une partie amont 1a, de forme sensiblement cylindrique, et une partie aval 1b, de forme conique.

Relier (fixer) ensemble la sortie précitée du turboréacteur, qui peut être ladite virole annulaire interne 22a, et ledit élément central, qui peut être ladite partie amont 1a du cône d'éjection 1, est difficile. En, effet, comme on le voit figure 2 qui illustre en coupe un agrandissement de la zone Il de la figure 1, il peut être compliqué de fixer ensemble axialement, au niveau d'un bulbe 7, la sortie précitée du turboréacteur, qui peut être ladite virole annulaire interne 22a et l'élément central (repéré de façon générale 3) que l'on assimilera, dans l'exemple de réalisation de l'invention qui suit, au cône d'éjection 1, le bulbe 7 étant une zone, renflée radialement vers l'extérieur, que peut présenter l'élément central 3.

Peuvent ainsi se poser en particulier des problèmes :
- de gestion du diamètre d'entrée de l'élément central pour le passage de supports souples,
- de fixation compliquée, notamment en liaison avec l'utilisation de matériaux différents,
- de liaisons inclinées (non parallèles à l'axe X), dans le bulbe,
- de fuite ou de déviation du flux de gaz.

Un ensemble pour turbomachine d'aéronef selon l'état de la technique est aussi connu de FR 2 914 955 A1.

Une solution proposée à une partie au moins de ces problèmes consiste, sur un ensemble pour turbomachine d'aéronef selon les caractéristiques de la revendication 1, à associer :
- une (structure de) sortie de gaz métallique de la turbomachine, et
- un élément central d'éjection de gaz, comme précité.

Sur cet ensemble, la bride de liaison présentée ci-avant comprendra une partie annulaire et, circonférentiellement, des pattes flexibles présentant individuellement, axialement :
une première extrémité vers laquelle la patte est raccordée à ladite partie annulaire, et
- une seconde extrémité libre vers laquelle ladite patte est fixée avec l'élément central, la seconde extrémité libre étant située axialement à l'amont de la première extrémité, et,
- sur une dite patte flexible de la bride de liaison, la seconde extrémité libre s'étendra en saillie radiale vers l'intérieur par rapport à la première extrémité.

Dans le texte, raccordé à pour sens fixé avec par un moyen mécanique (vissage, soudage notamment) ou intégré avec. Si cela créé un raccordement monobloc, cela est précisé. Une telle solution permet notamment de reprendre les dilatations différentielles entre ledit élément central et ladite partie annulaire qui peuvent respectivement appartenir au carter d'échappement métallique et au cône d'éjection qui n'est pas métallique, ou les définir.

On limite bien le risque de fuite ou de déviation du flux de gaz, dès lors que ladite partie annulaire, radialement plus extérieure que les pattes flexibles, fait naturellement écran, tout en permettant de décaler radialement les zones de fixation et de conjuguer souplesse et facilité de montage.

En assurant une souplesse de l'aval vers l'amont dans les fixations via lesdites pattes flexibles, on va en outre pouvoir rapprocher vers l'amont, donc vers la bride de liaison, la fixation de l'élément central/cône d'éjection, ceci favorisant une zone de fixation située axialement en dehors d'un dit bulbe et préparant la présence d'une zone de traitement acoustique.

Traiter ensemble les problèmes suivants s'est toutefois avéré délicat :
- fixation et positionnements relatifs : matériaux différents, dilations différentielles, risque de fuite ou de déviation du flux de gaz,
- mise en place effective d'une zone de traitement (d'affaiblissement) acoustique qui n'altère pas l'écoulement ni ne complique encore les fixations.

Leur prise en compte a amené à proposer que, en liaison avec une dite sortie métallique de turbomachine, l'élément central présente une paroi périphérique :
- pourvue d'une structure d'atténuation acoustique (appelée aussi structure d'affaiblissement acoustique), qui peut être à âme alvéolaire, et
- présentant, en amont de la structure d'atténuation acoustique, une partie extrême amont :
   -- située de façon radialement intérieure par rapport aux pattes flexibles, et
   -- où l'élément central est fixé avec lesdites pattes flexibles à leurs dites secondes extrémités libres, de sorte que la structure d'atténuation acoustique est cantonnée en aval de (ne déborde pas plus en amont que) la partie extrême amont par laquelle s'opère la fixation avec les pattes flexibles.

Par « atténuation acoustique », on doit comprendre l'utilisation de matériau insonorisant et/ou une réduction d'au moins une (plusieurs) dizaine(s) de dB par rapport à la même solution sans ladite structure d'atténuation acoustique.

Concernant maintenant l'étanchéité que l'on souhaite favoriser entre ladite sortie métallique de turbomachine et, à l'aval, l'élément central, il est aussi proposé :
- que ladite partie annulaire de la bride (appelée aussi virole) de liaison définisse une paroi pleine qui (axialement et circonférentiellement) occupera uniformément l'espace entre la sortie métallique de turbomachine et ledit élément central ; et/ou
- que ladite partie annulaire présente, à une extrémité aval, un joint annulaire à doigts flexibles (finger seals en anglais) s'appuyant contre une surface radialement extérieure de l'élément central, de façon à assurer une continuité aérodynamique.

On agira ainsi efficacement contre les fuites précitées. On favorisera en outre une veine aérodynamique lisse et donc la performance du cône d'éjection, avec une protection via ladite partie annulaire de la bride.

De préférence, ladite partie annulaire, qui sera coaxiale avec ledit élément central, sera cylindrique. De la sorte, on favorise encore la continuité aérodynamique dans la veine de gaz.

Il est aussi proposé ce qui suit, considéré en combinaison ou non :
a) la fixation entre l'élément central et lesdites pattes flexibles pourra comprendre des vis les traversant, les vis comprenant chacune une tige filetée ayant une tête disposée de façon radialement intérieure par rapport à la partie extrême amont et aux pattes flexibles.
   On pourra ainsi visser radialement depuis l'intérieur, les têtes de vis étant bien à l'écart de la veine de gaz. Il suffira d'un faible espace radial entre les pattes flexibles et ladite partie annulaire pour y placer un taraudage, par exemple via un écrou) ;
b) les pattes flexibles pourront s'étendre de façon radialement intérieure par rapport à la partie annulaire, laquelle pourra se prolonger vers l'amont par une collerette radiale de fixation orientée radialement vers l'intérieur.
   Ceci favorisera :
   - la structuration mécanique et la protection des pattes flexibles et de ses fixations, y compris si y est fixée la partie extrême amont de la structure d'atténuation acoustique (qui peut être en CMC),
   - la continuité aérodynamique dans la veine de gaz.

Il pourra même être possible que la structure d'atténuation acoustique s'étende axialement jusqu'au droit desdites pattes.

Ainsi, on aura pu fixer ledit élément central, y compris donc un élément central en CMC (composite à matrice céramique, comme connu en soi), sans impacter le traitement acoustique et sans être situé dans le profil aérodynamique en bulbe. La bride de liaison pourra alors être métallique, sans difficulté. Et, d'autant plus ainsi, on maximisera la surface traitée acoustique de l'élément central.

Ce qui précède sera de préférence réalisé :
- avec une dite partie extrême amont de fixation de l'élément central s'étendant parallèlement audit axe (X) (évitant donc les liaisons inclinées précitées),
- de même pour lesdites pattes vers leurs dites secondes extrémités, de façon qu'ainsi ces pattes et ladite partie extrême amont de l'élément central/cône d'éjection soient fixées ensemble par des vis les traversant.

Avec desdites pattes flexibles assurant une souplesse de l'aval vers l'amont dans les fixations, on va pouvoir :
- gagner en compacité,
- donc limiter la masse de la solution par rapport à d'autres supports souples,
- intégrer, y compris avec des brides de liaison métalliques, des architectures d'éléments centraux/cônes d'éjection (CMC ou métalliques) pourvus de traitements acoustiques rapportés à une veine de gaz (voir la veine primaire 24 précitée) équipée de raidisseurs amont et aval.

Le raccordement des pattes flexibles avec ladite partie annulaire, à leurs dites première extrémité pourra être réalisée par des soudures.

Ainsi, on pourra éviter la présence de découpes formées dans la partie annulaire et créant des ouvertures où du gaz peut passer.

Il est aussi proposé que, pour laisser un espace radial suffisant à l'endroit des pattes flexibles et de la fixation radiale entre elles et l'élément central, l'appui des doigts flexibles soit situé vers une rupture de pente où l'élément central s'affine en direction de la partie extrême amont.

Ainsi, on aura traité une nouvelle fois ensemble les problèmes d'étanchéité, de fixation, de qualité de l'écoulement gazeux, de fixation et d'accès pour une intervention ultérieure. L'invention pourra être, si nécessaire, mieux comprise et d'autres détails, caractéristiques et avantages de l'invention pourront apparaître à la lecture de la description suivante faite à titre d'exemple non limitatif en référence aux dessins annexés dans lesquels :

### Brève description des figures

[Fig. 1] est une coupe schématique de profil (coupe axiale) d'une turbomachine pour aéronef connue;
[Fig. 2] correspond en demi-coupe axiale à la vue locale dans le cadre Il de la figure 1, dans une version différente de celle de l'invention ;
[Fig. 3] est une vue en perspective de la bride de liaison (9 ci-après), illustrée figure 2 ; et
[Fig. 4] correspond à une partie de la vue de la figure 2, mais dans une version conforme à l'invention, à l'endroit de l'agrandissement de la zone marquée IV figure 2.

### Description détaillée de l'invention

Sur la figure 2, on retrouve, par référence avec la figure 1 et donc sur un turboréacteur 10, un ensemble 2 de queue de moteur 12, comprenant un élément central 1 d'éjection de gaz (ou cône d'éjection) et une bride 9 de liaison interposée entre, à l'amont, une sortie métallique d'un turboréacteur (ici la virole annulaire interne 22a du carter d'échappement) et, à l'aval, ledit élément central 1, pour les relier ensemble via les fixations axiales 5 qui peuvent être des vis. L'élément central 1 est en composite à matrice céramique et annulaire autour de l'axe (X). Il est adapté à ce que du gaz soit éjecté par le turboréacteur autour de lui, d'amont vers l'aval ; voir flèche F figures 1,2.

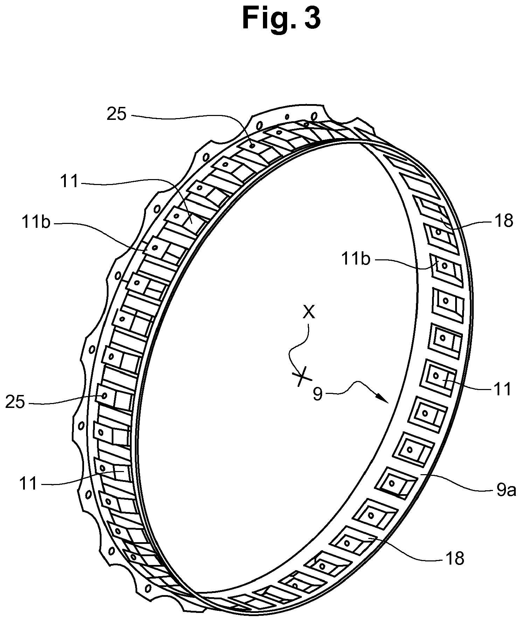

Dans cette réalisation, non conforme à l'invention et comme illustré aussi figure3, la bride de liaison 9 comprend une partie annulaire 9a, coaxiale avec l'élément central 1 et, circonférentiellement, des pattes flexibles 11.

Les pattes 11 flexibles se succèdent circonférentiellement, de façon régulières, autour de l'axe X, sur la partie annulaire 9a. Les pattes 11 se présentent comme des lames qui peuvent être sensiblement rectangulaires. Pour leur articulation flexible par rapport à la partie annulaire 9a, elles présentent individuellement, axialement :
- une première extrémité 11a à (l'endroit de) laquelle la patte est raccordée de façon monobloc à ladite partie annulaire 9a, et
- une seconde extrémité 11b libre, en saillie radiale (axe Z) vers l'extérieur par rapport à la première extrémité 11a et vers laquelle la patte 11 est fixée avec l'élément central 1. Chacune peut donc fléchir à la première extrémité 11a. Elles définissent autant de supports souples.

L'élément central/cône d'éjection 1, ci-après dénommé systématiquement élément central, est en composite à matrice céramique et la bride de liaison 9 est métallique. Il peut s'agir d'alliage de titane ou de tout autre alliages à haute tenue en température.

Notamment pour ne pas fixer les pattes 11 à l'élément central 1 en zone traitée pour une atténuation acoustique (voir détails ci-après ; zone 13) ni dans le bulbe 7, la seconde extrémité libre 11b d'une dite (de chaque) patte 11 flexible, où il y a fixation avec l'élément central 1, est située axialement à l'amont (AM) de la première extrémité 11a de cette patte. L'élément central 1 présente une paroi périphérique 15 :
- pourvue localement d'une structure 17 d'atténuation acoustique à âme acoustiquement absorbante, qui peut être alvéolaire, et
- présentant, en amont de la structure 17 d'atténuation acoustique, une partie extrême amont 19 où l'élément central 1 est fixé avec lesdites pattes flexibles 11, à leurs secondes extrémités libres 11b.

Ainsi, la structure 17 d'atténuation acoustique est cantonnée en aval de la partie 19 par laquelle s'opère la fixation avec les pattes 11.

Pour fiabiliser la fixation, la partie extrême amont 19 forme favorablement un anneau circonférentiellement fermé prolongeant de façon monobloc la paroi périphérique 15 vers l'amont par rapport à la structure 17 d'atténuation acoustique, comme un axial. Ce rebord annulaire 19 est traversé de trous 21 où passent des vis 23 de fixation qui traversent également d'autres trous 25 que présentent les pattes 11 flexibles vers leurs secondes extrémités libre 11b respectives.

En outre, pour favoriser un débattement radial important et la mise en place des fixations (telles les vis 23 ; voir figures 2), les pattes 11 flexibles s'étendent radialement en saillie par rapport à découpes 18 formées dans la partie annulaire 9a ; voir figure 3.

En pratique, l'élément central 1 peut comprenne, comme indiqué en référence à la figure 1, la partie amont 1a (couramment donc désignée « front plug ») et, fixée à elle axialement (par exemple par boulonnage), la partie aval 1b (couramment donc désignée « rear plug »). Ce serait alors cette partie amont 1a qui serait équipée d'au moins une dite structure 17 d'atténuation acoustique, et donc de la paroi 15 et de la partie 19.

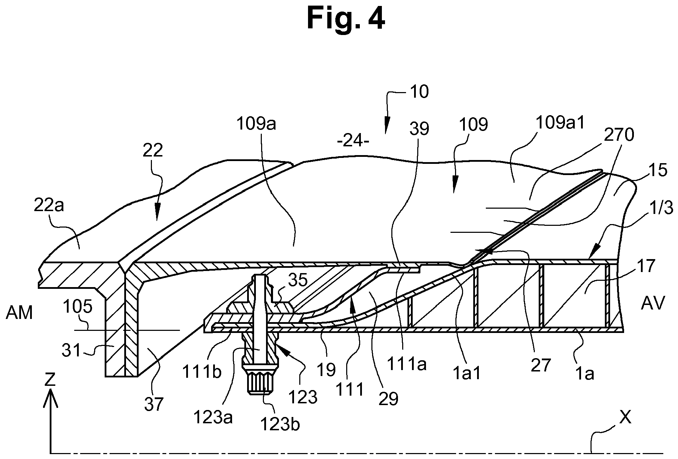

Pour intéressante qu'elle soit cette solution peut encore être améliorée ; c'est le cas avec la solution de l'invention schématisée sur la figure 4 où les références sont celles des figures précédentes augmentées d'une centaine pour les pièces et parties qui se correspondent et qui sont fonctionnement identiques ou similaires.

En comparant les figures 2 et 4, on notera aisément tant les points communs que les différences des deux solutions. En outre, en utilisant la figure 3, où la bride de liaison 9 est schématisée entièrement, sur tout son périmètre, on transposera aisément la vue en coupe de la figure 4 à ce qu'est la bride de liaison 109 de l'invention, qui s'étend circonférentiellement de façon identique à la bride de liaison 9.

Ci-après, on ne détaille que les différences entre les solutions.

Ainsi, trouve-t-on dans la « solution modifiée » de l'invention, radialement, sur les (et de préférence chaque) patte(s) 111 flexible(s), une dite seconde extrémité 111b libre s'étendant en saillie radiale vers l'intérieur par rapport à la première extrémité 111a.

On limite de la sorte le risque de fuite ou de déviation du flux de gaz, dès lors que ladite partie annulaire 109a, radialement plus extérieure que les pattes flexibles 111, fait naturellement écran, tout en permettant de décaler radialement les zones de fixation (voir fixations 105 et 123) et de conjuguer souplesse et facilité de montage.

En assurant une souplesse de l'aval (AV) vers l'amont (AM)dans les fixations via les pattes flexibles 111, on va en outre pouvoir rapprocher vers l'amont, donc vers la bride de liaison 109, la fixation de l'élément central 3 / cône d'éjection 1.

Plutôt que monoblocs avec la partie annulaire 109a, les pattes flexibles 111 pourront être soudées (repère 39 figure 4) avec cette partie annulaire, à leurs dites premières extrémités 111a respectives.

Pour l'étanchéité entre ladite sortie métallique 22 de la turbomachine 10 et, à l'aval, l'élément central 3, il est aussi proposé que ladite partie annulaire 109a de la bride de liaison 109 définisse une paroi pleine qui (axialement et circonférentiellement) occupant donc uniformément l'espace entre la sortie métallique 22 de la turbomachine et ledit élément central 3.

Le même objectif est suivi, avec une continuité aérodynamique visée, dans le fait que ladite partie annulaire présente, à une extrémité aval libre 109a1, un joint annulaire 27 à doigts flexibles 270 (finger seal) s'appuyant contre une surface radialement extérieure (dans l'exemple la paroi périphérique 15) de l'élément central 3 / cône d'éjection 1.

L'appui peut en particulier être situé en partie amont 1a, vers une rupture de pente 1a1 où l'élément central 3 / le cône d'éjection 1 s'affine en direction pour laisser un espace radial 29 suffisant à l'endroit des pattes flexibles 111 et des fixations radiales 123.

Comme dans la solution de la figure 2, celle de la figure 4 propose que l'élément central 1/3 présente donc une paroi périphérique 15:
- pourvue d'une structure 17 d'atténuation acoustique, et
- présentant, en amont de la structure d'atténuation acoustique, une partie extrême amont 19 :
   -- située de façon radialement intérieure par rapport aux pattes flexibles 111, et
   -- où l'élément central 1/3 est fixé avec lesdites pattes flexibles 111 à leurs dites secondes extrémités libres 111b.

Le montage entre l'élément central 1/3 et la bride de liaison en sera facilité : on pourra intervenir radialement bien à l'écart de la veine de gaz F.

Il est aussi proposé que la fixation entre l'élément central 1/3 et lesdites pattes flexibles 111 s'effectue par les vis 123, lesquelles les traverseront, radialement a priori.

Les vis 123 comprendront favorablement chacune une tige filetée 123a ayant une tête 123b élargie disposée de façon radialement intérieure par rapport à la partie extrême amont 1a (et en particulier sa partie effilée 1a1) et aux pattes flexibles 111.

On pourra ainsi visser, radialement depuis l'intérieur, les têtes 123b de vis. L'espace radial 29 pourra demeurer réduit entre les pattes flexibles et ladite partie annulaire 109a, juste suffisant pour y placer un taraudage, par exemple via un écrou 35 engagé avec la tige filetée 123a correspondante.

Et pour la fixation avec la sortie métallique 22a, non seulement les pattes flexibles 111 s'étendront avantageusement de façon radialement intérieure par rapport à la partie annulaire 109a, mais la partie annulaire 109a pourra alors se prolonger vers l'amont par une collerette radiale 37 de fixation orientée radialement vers l'intérieur (et non pas vers l'extérieur comme dans la solution de la figure 2 : collerette ou rebord 33 extérieur).

On favorisera d'ailleurs encore la continuité aérodynamique avec, axialement, face à la collerette radiale 37, un rebord annulaire 31 de fixation de la sortie métallique 22a orienté également radialement vers l'intérieur (et non pas vers l'extérieur comme dans la solution de la figure 2).

Tout ceci est utile à une fixation pratique, fiable et aérodynamique entre une sortie 22 métallique et un élément central 1/3 en CMC et traité acoustiquement.

La bride de liaison 109 pourra alors être métallique, ceci d'autant plus si la partie effilée 1a1 :
- se prolonge vers l'amont jusqu'au droit des pattes flexibles 111, de façon radialement vers l'intérieur, et
- présente aussi une structure 17 d'atténuation acoustique.

Comme déjà indiqué, ce qui précède sera de préférence réalisé :
- avec une dite partie extrême amont 19 de fixation de l'élément central 1/3 s'étendant parallèlement audit axe (X) (évitant donc les liaisons inclinées précitées),
- de même pour les pattes 111 vers leurs dites secondes extrémités 111b, de façon qu'ainsi ces pattes et ladite partie extrême amont 19 de l'élément central 3 / cône d'éjection 1 soient fixées ensemble, dans un espace radialement réduit.

## Revendications

1. Ensemble pour turbomachine d'aéronef, l'ensemble comprenant :
- une sortie de gaz (22a) métallique de turbomachine,
- un élément central (1) d'éjection de gaz, annulaire autour d'un axe (X) et adapté à ce que du gaz soit éjecté par la turbomachine autour de lui, d'amont vers l'aval, et
- une bride de liaison (109) interposée entre, à l'amont, la sortie de gaz (22a) métallique de turbomachine et, à l'aval, l'élément central (1), pour les relier ensemble, la bride de liaison (109) comprenant une partie annulaire (109a), et, circonférentiellement, des pattes flexibles (111) présentant individuellement, axialement :
-- une première extrémité (111a) vers laquelle la patte est raccordée à ladite partie annulaire, et
-- une seconde extrémité (111b) libre vers laquelle ladite patte est fixée avec l'élément central (1), la seconde extrémité libre (111b) étant située axialement à l'amont de la première extrémité (111a), et,
sur une dite patte (111) flexible, la seconde extrémité (111b) libre s'étend en saillie radiale vers l'intérieur par rapport à la première extrémité (111a),
**caractérisé en ce que** l'élément central (1) présente une paroi périphérique (15):
- pourvue d'une structure (17) d'atténuation acoustique, et
- présentant, en amont de la structure d'atténuation acoustique, une partie extrême amont (19) :
-- située de façon radialement intérieure par rapport aux pattes flexibles (111), et
-- où l'élément central (1) est fixé avec lesdites pattes flexibles (111) à leurs dites secondes extrémités libres (111b), de sorte que la structure d'atténuation acoustique est cantonnée en aval de la partie extrême amont (19) par laquelle s'opère la fixation avec les pattes flexibles (111).

2. Ensemble selon la revendication 1, dans lequel la fixation entre l'élément central (1) et lesdites pattes flexibles (11) comprend des vis (123) les traversant et qui comprennent chacune une tige filetée (123a) ayant une tête (123b) disposée de façon radialement intérieure par rapport à la partie extrême amont (19) et aux pattes flexibles (111).

3. Ensemble selon l'une des revendications précédentes, dans lequel les pattes flexibles (111) s'étendent de façon radialement intérieure par rapport à la partie annulaire (109a), laquelle se prolonge vers l'amont par une collerette radiale (37) de fixation orientée radialement vers l'intérieur.

4. Ensemble selon l'une des revendications précédentes, dans lequel la structure d'atténuation acoustique (17) s'étend axialement jusqu'au droit desdites pattes (111).

5. Ensemble selon l'une des revendications précédentes, dans lequel l'élément central (1) est en composite à matrice céramique et la bride de liaison (109) est métallique.

6. Ensemble selon l'une des revendications précédentes, dans lequel une dite patte (111) flexible est raccordée à ladite partie annulaire (109a), à une dite première extrémité (11a), par soudure (39).

7. Ensemble selon l'une des revendications précédentes, dans lequel ladite partie annulaire (109a) définit une paroi pleine qui occupe uniformément l'espace entre la sortie de gaz (22a) métallique de turbomachine et, à l'aval, l'élément central (1).

8. Ensemble selon l'une des revendications précédentes, dans lequel ladite partie annulaire (109a) présente à une extrémité aval (109a1) un joint annulaire (27) à doigts flexibles (270) s'appuyant contre une surface radialement extérieure de l'élément central (1), de façon à assurer une continuité aérodynamique.

9. Ensemble selon la revendication 8, dans lequel l'appui des doigts flexibles (270) est situé vers une rupture de pente (1a1) où l'élément central (1) s'affine en direction de la partie extrême amont (19).

## Patentansprüche

1. Anordnung für ein Turbotriebwerk eines Luftfahrzeugs, wobei die Anordnung enthält:
- einen metallischen Gasauslass (22a) aus dem Turbotriebwerk,
- ein zentrales Gasausstoßelement (1), das um eine Achse (X) ringförmig verläuft und so ausgelegt ist, dass Gas von dem Turbotriebwerk um dieses herum von stromaufwärts nach stromabwärts ausgestoßen wird, und
- einen Verbindungsflansch (109), der zwischen dem stromaufwärts gelegenen metallischen Gasauslass (22a) des Turbotriebwerks und dem stromabwärts gelegenen zentralen Element (1) angeordnet ist, um diese miteinander zu verbinden, wobei der Verbindungsflansch (109) einen ringförmigen Abschnitt (109a) und flexible Laschen (111) in Umfangsrichtung umfasst, die jeweils axial aufweisen:
-- ein erstes Ende (111a), zu dem hin die Lasche mit dem ringförmigen Abschnitt verbunden ist, und
-- ein freiliegendes zweites Ende (111b), zu dem hin die Lasche mit dem zentralen Element (1) fixiert ist, wobei das freiliegende zweite Ende (111b) axial stromaufwärts des ersten Endes (111a) angeordnet ist, und
wobei an einer flexiblen Lasche (111) das freiliegende zweite Ende (111b) sich in Bezug auf das erste Ende (111a) radial nach innen vorspringend erstreckt, **dadurch gekennzeichnet, dass** das zentrale Element (1) eine Umfangswand (15) aufweist, die
- mit einer Schalldämpfungsstruktur (17) versehen ist, und
- stromaufwärts von der Schalldämpfungsstruktur einen stromaufwärts gelegenen Endabschnitt (19) aufweist,
-- der radial innen in Bezug auf die flexiblen Laschen (111) liegt, und
-- bei dem das zentrale Element (1) mit den flexiblen Laschen (111) an ihren freiliegenden zweiten Enden (111b) fixiert ist, so dass die Schalldämpfungsstruktur stromabwärts des stromaufwärts gelegenen Endabschnitts (19), über welchen die Fixierung mit den flexiblen Laschen (111) erfolgt, angeordnet ist.

2. Anordnung nach Anspruch 1,
wobei die Fixierung zwischen dem zentralen Element (1) und den flexiblen Laschen (11) Schrauben (123) umfasst, die durch diese hindurchgehen und jeweils einen Gewindeschaft (123a) mit einem Kopf (123b) umfassen, der in Bezug auf den stromaufwärts gelegenen Endabschnitt (19) und die flexiblen Laschen (111) radial innen angeordnet ist.

3. Anordnung nach einem der vorhergehenden Ansprüche,
wobei sich die flexiblen Laschen (111) radial innen in Bezug auf den ringförmigen Abschnitt (109a) erstrecken, der sich stromaufwärts in einem radial nach innen gerichteten radialen Befestigungsbund (37) fortsetzt.

4. Anordnung nach einem der vorhergehenden Ansprüche,
wobei sich die Schalldämpfungsstruktur (17) axial bis in den Bereich der Laschen (111) erstreckt.

5. Anordnung nach einem der vorhergehenden Ansprüche,
wobei das zentrale Element (1) aus einem Verbundwerkstoff mit Keramikmatrix besteht und der Verbindungsflansch (109) aus Metall besteht.

6. Anordnung nach einem der vorhergehenden Ansprüche,
wobei eine flexible Lasche (111) an einem ersten Ende (11a) mit dem ringförmigen Abschnitt (109a) durch Verschweißen (39) verbunden ist.

7. Anordnung nach einem der vorhergehenden Ansprüche,
wobei der ringförmige Abschnitt (109a) eine massive Wand definiert, die den Raum zwischen dem metallischen Gasauslass (22a) des Turbotriebwerks und dem stromabwärts gelegenen zentralen Element (1) gleichmäßig einnimmt.

8. Anordnung nach einem der vorhergehenden Ansprüche,
wobei der ringförmige Abschnitt (109a) an einem stromabwärtigen Ende (109a1) eine ringförmige Dichtung (27) mit flexiblen Fingern (270) aufweist, die an einer radial äußeren Oberfläche des zentralen Elements (1) aufliegen, um eine aerodynamische Kontinuität zu gewährleisten.

9. Anordnung nach Anspruch 8,
wobei sich die Auflage der flexiblen Finger (270) in Richtung eines Neigungsbruchs (1a1) befindet, an dem sich das zentrale Element (1) zum stromaufwärts gelegenen Endabschnitt (19) hin verjüngt.

## Claims

1. An assembly for a turbomachine of an aircraft, the assembly comprising:
- a metal gas outlet (22a) for the turbomachine,
- a central element (1) for ejecting gas, which is annular about an axis (X) and adapted to have gas ejected around it by the turbomachine, from upstream to downstream, and
- a connecting flange (109) interposed between, upstream, the metal gas outlet (22a) for the turbomachine, and downstream, the central element (1), to connect them together, the connecting flange (109) comprising an annular portion (109a), and, circumferentially, flexible tabs (111) individually having, axially:
-- a first end (111a) at which the tab is connected to said annular portion, and
-- a second free end (111b) at which said tab is attached with the central element (1), the second free end (111b) being located axially upstream of the first end (111a), and,
on said flexible tab (111), the second free end (111b) extends radially inwardly with respect to the first end (111a),
**characterised in that** the central element (1) has a peripheral wall (15):
- provided with an acoustic-attenuation structure (17), and
- having, upstream of the acoustic-attenuation structure, an upstream end portion (19):
-- which is located radially inwardly with respect to the flexible tabs (111), and
-- where the central element (1) is attached with said flexible tabs (111) at said second free ends (111b), so that the acoustic-attenuation structure is confined downstream of the upstream end portion (19) through which the attachment with the flexible tabs (111) takes place.

2. The assembly according to claim 1, wherein the attachment between the central element (1) and said flexible tabs (11) comprises screws (123) passing through them, each screw comprising a threaded rod (123a) having a head (123b) disposed radially inwardly with respect to the upstream end portion (19) and the flexible tabs (111).

3. The assembly according to any of the preceding claims, wherein the flexible tabs (111) extend radially inwardly with respect to the annular portion (109a), the annular portion extending toward upstream by a radial attachment collar (37) oriented radially inwards.

4. The assembly according to any of the preceding claims, wherein the acoustic-attenuation structure (17) extends axially to said tabs (111).

5. The assembly according to any of the preceding claims, wherein the central element (1) is made of a ceramic matrix composite and the connecting flange (109) is made of metal.

6. The assembly according to any of the preceding claims, wherein one said flexible tab (111) is connected to said annular portion (109a), at a said first end (11a), by welding (39).

7. The assembly according to any of the preceding claims, wherein said annular portion (109a) defines a solid wall which uniformly occupies the space between the metal gas outlet (22a) for the turbomachine and, downstream, the central element (1).

8. The assembly according to any of the preceding claims, wherein said annular portion (109a) has, at a downstream end (109a1), an annular seal (27) with flexible fingers (270) supported against a radially outer surface of the central element (1), so as to ensure an aerodynamic continuity.

9. The assembly according to claim 8, wherein the support of the flexible fingers (270) is located towards a break in slope (1a1) where the central element (1) tapers towards the upstream end portion (19).
